# EUROPEAN PATENT APPLICATION

(11) **EP 2 692 822 A1**
(43) Date of publication of application: **05.02.2014**
(21) Application number: 11862067.3
(22) Date of filing: 03.05.2011
(51) Int. Cl.: C09K 3/18, E01H 10/00, C09D 163/00, C09D 195/00

(54) **ECO-FRIENDLY ROAD SURFACE COATING MATERIAL FOR THAWING ICE AND SNOW AND METHODS OF PREPARING AND USING THE SAME**

(30) Priority: 30.03.2011 CN 201110077642
(71) Applicant: CCCC First Highway Consultants Co., Ltd., Xi'an, Shaanxi 710075 (CN)
(72) Inventor: DING, Xiaojun, Shaanxi 710075 (CN); CHEN, Tuanjie, Shaanxi 710075 (CN); LI, Gang, Shaanxi 710075 (CN); XIANG, Hao, Shaanxi 710075 (CN); WANG, Zhengjun, Shaanxi 710075 (CN); ZHANG, Dongmei, Shaanxi 710075 (CN); LI, Haoming, Shaanxi 710075 (CN); LU, Jingjing, Shaanxi 710075 (CN)
(74) Representative: Marchitelli, Mauro
(86) International application number: PCT/CN2011/000771
(87) International publication number: WO 2012/129742

(57) **Abstract**

The present invention discloses an eco-friendly road surface material for thawing ice and snow and the methods of preparing and using the same. The preparation method includes the following steps:1) adding 10-50 parts of snow thawing substances into 50-100 parts by weight of water, after dissolving the snow thawing substances completely, adding sodium hydroxide solution to adjust the pH value of the mixture to be 8-10, then adding10-50 parts by weight of support material, and stirring, baking, milling and sieving the mixture to obtain a support powder loaded with snow thawing substances; 2) adding 15-40 parts by weight of the support powder loaded with snow thawing substances into 10-30 parts by weight of cation emulsified asphalt, then adding 10-30 parts by weight of aqueous epoxy resin, 10 to 50 parts by weight of water and the curing agent of aqueous epoxy resin to obtain the coating material for thawing ice and snow.

## Description

### Technical Field

The present invention relates to an eco-friendly road surface coating material for thawing ice and snow, preparing methods and the use thereof.

### Technical Background

A large amount of snow in winter will cause serious consequences such as traffic jam, road outage and airport closing. Now, snow removal methods at home and abroad are mainly divided into two kinds, i.e., active snow removal methods and passive snow removal methods, and passive snow removal methods mainly comprise the artificial snow removal method, the mechanical snow removal method, the snow removal method by spraying ice thawing agents, and so on. But all of the three passive snow removal methods have many defects, wherein the artificial snow removal method has a low operational efficiency and requires a high labor intensity; through the mechanical snow removal method, it cannot remove the ice layer on the road surface comparatively completely, such that the anti-sliding effect of the road surface cannot be restored completely; and in the snow removal method by spraying ice thawing agents, it just mixes the snow thawing substances simply, wherein the spraying is not uniform, and the substances affect the environment greatly after being sprayed in the ambient air.

The above methods for removing snow all belong to passive methods, which can be carried out on the road only after it snows, such that the road cannot be ensured to be always open. The road active snow thawing technology means making the road possess active snow removal function by using a certain technology. Currently, active snow thawing technologies at home and abroad mainly comprise the self-stress elastic road surface pavement technology, the energy conversion snow thawing technology, the adding salt on the road surface mixture technology, the road surface inlaid pavement technology, the road surface rough pavement technology, etc. But the above road active snow thawing technologies all have large defects, such as high cost, damaging the road surface structure to a certain extent, shortening the road service life, and so on, which all limit widely the use thereof.

### Summary of the invention

The present invention aims to provide an eco-friendly road surface coating material for thawing ice and snow, preparing methods and the use thereof, wherein after loading the snow thawing substances on a support material, mixing it with emulsified asphalt, aqueous epoxy resin and curing agents, then spraying it to the clean road surface to make the road possess an active snow thawing function.

The present invention provides a preparation method for an eco-friendly road surface coating material for thawing ice and snow, wherein said method is achieved by the following steps:
step 1: adding 10-50 parts by weight of snow thawing substances into 50-100 parts by weight of water, dissolving the snow thawing substances completely, adding a sodium hydroxide solution with a concentration of 0.5-2.0mol/L to adjust the pH value of the solution to be 8-10, then adding 10-50 pats by weight of support material, and after stirring uniformly, baking and milling the mixture, sieving it through sieves with 50-100 meshes to obtain a support powder loaded with snow thawing substances;
step 2: adding 15-45 parts by weight of the support powders loaded with snow thawing substances into 10 to 30 parts by weight of cation emulsified asphalt, then adding 10 to 30 parts by weight of aqueous epoxy resin, 10-50 parts by weight of water and a curing agent of aqueous epoxy resin successively to obtain the coating material for thawing ice and snow, wherein the adding amount of the curing agent of aqueous epoxy resin, based on aqueous epoxy resin, is 20-60%.

Said snow thawing substances in step 1 are one or more of chlorides, nitrates, acetates, polyethylene glycols and glycols, and said support material in step 1 is one or more of silica gel, diatomite, sawdust powders, molecular sieve series, volcanic rock bentonite and expansion perlites.

Said curing agent of aqueous epoxy resin in step 2 is 703 curing agent, 120 curing agent, and 593 curing agent or fatty acid modified amines.

Said preparation method for an eco-friendly road surface coating material for thawing ice and snow, wherein said method is achieved by the following steps:
step 1: adding 50 parts by weight of potassium acetate into 100 parts by weight of water, dissolving the potassium acetate completely, adding a sodium hydroxide solution with a concentration of 2.0mol/L to adjust the pH value of the solution to be 10, then adding 50 parts by weight of sawdust powders, and after stirring uniformly, baking and milling the mixture, sieving it through sieves with 100 meshes to obtain a support powder loaded with snow thawing substances;
step 2: adding 40 parts by weight of the support powder loaded with snow thawing substances into 30 parts by weight of cation emulsified asphalt, then adding 30 parts by weight of aqueous epoxy resin, 50 parts by weight of water and 18 parts by weight of the curing agent of fatty acid modified amines successively to obtain the coating materials for thawing ice and snow.

An eco-friendly road surface coating material for thawing ice and snow as the above-mentioned is provided.

Use of said eco-friendly road surface coating material for thawing ice and snow, wherein said use is achieved by the following steps:
step 1: cleaning and drying the road surface, and covering the signs and line markings on the road;
step 2: after stirring the coating material for thawing ice and snow uniformly, adding it to a spraying machine with uniform spraying function;
step 3: opening or folding the spraying crossbar of a spraying machine to adjust the spray width of the spraying machine according to the width of the road which needs to be sprayed, setting a piece of paper or isolation cloth with a width of 50-100cm wider than the spraying width and a length not shorter than 2m at the start and end points to ensure the sideline of the start and end positions to be vertical and thus to avoid repeated spraying,
step 4: adjusting the nozzle of the spraying machine, spraying according to the pre-set route and spraying amount, and artificially and in time treating the places which are not uniformly sprayed by the spraying machine, the spraying amount being of 0.3 to 1 kg/m²,
step 5: after closing the traffic for maintenance for 3 to 10h, opening the traffic.

In step 5, if the traffic needs to be opened in a short time, clean sands can be sprayed on the road after the construction.

Compared with the prior art, the present invention has the following advantages: the snow thawing substances related in the present invention can decrease the freezing point of water to -5 to -20 , such that the ice and snow on the road surface can thaw at an extremely low temperature; the snow thawing substances also have a sustained-release function, which enables the active snow thawing effect to be maintained for equal to or more than 4 months, so as to meet the requirements of the road for thawing snow in a whole winter; the coating material does not affect the road infrastructure or the surrounding environment within a certain period of time; the coating material has strong adhesive with the road surface, and has a good wear-resistant effect after being sprayed on the road surface, enabling the active snow thawing effect to be maintained for 4 months or even longer, so as to meet the requirements of the road for thawing snow in a whole winter; the coating material also has such effects as closing the microfractures on the road in their early stages of development, preventing the surface of the road being loose or water being damaged due to road surface water infiltration, such that the road surface service life is extended effectively; the coating material has low cost, simple construction process and convenient maintenance compared with other road active snow removal products.

### Description of Drawings

Figure 1 shows the coating specimen graph of Example 1;
Figure 2 shows the blank specimen graph of Example 1;
Figure 3 shows the coating specimen graph of Example 2;
Figure 4 shows the blank specimen graph of Example 2;
Figure 5 shows the coating specimen graph of Example 4;
Figure 6 shows the blank specimen graph of Example 4;
Figure 7 shows the coating specimen graph of Example 5; and
Figure 8 shows the blank specimen graph of Example 5.

### Embodiment

The present invention will be explained in detail by the following examples.

The preparation method for an eco-friendly road surface coating material for thawing ice and snow provided by the present invention is as follows: after adjusting the pH value of the aqueous solution of snow thawing substances to be basic, adding the support material into it, and after stirring it uniformly, baking, milling and sieving it to obtain a support powder loaded with snow thawing substances; then adding the support powder comprising snow thawing substances into emulsified asphalt, and adding aqueous epoxy resin, water and a curing agent of aqueous epoxy resin into it successively to obtain the coating material for thawing ice and snow.

The snow thawing substances are common selected in the field, such as one or more of chlorides, nitrates, acetates, polyethylene glycols and ethylene glycols, wherein chlorides can be calcium chloride, magnesium chloride, sodium chloride or aluminum chloride, nitrates can be calcium nitrate, sodium nitrate, magnesium nitrate, ammonium nitrate or zinc nitrate, and acetates can be calcium acetate, magnesium acetate or potassium acetate. Such materials can reduce the freezing point of water, thaw ice and snow and make water stay liquid at a temperature of lower than 0°C. Said support material is one or more of silica gel, diatomite, sawdust powders, molecular sieve series, volcanic rock bentonite and expansion perlites. The use of support materials can load the snow thawing substances into its channels, and make the snow thawing substances be sustained-released so as to make the road surface to achieve its goals for thawing snow for a long time. The selection kinds and ratio of multi-components are known in the field, which can be selected according to the conditions of the procured raw materials.

The cation emulsified asphalt is used as emulsified asphalt, because the cation emulsified asphalt is used widely, of low cost, easily obtained, and has a good adhesion with the road surface. The aqueous epoxy resin is prepared with epoxy resin, nonionic emulsified agents and water by the reverse-phase method, wherein the nonionic emulsified agents are composed of polyoxyethylene sorbitan monolaurate. The aqueous epoxy resin reacts with the curing agents to form a netted macromolecular layer to pack the support powders comprising snow thawing substances in the coating. The specific preparation method is that, first adding a certain amount of a nonionic emulsified agent into the epoxy resin, then adding water into the epoxy resin slowly, making the epoxy resin system convert from the oil phase to the aqueous phase, wherein each property index is as follows, 50-60% of solid content, 0.25-0.32eq/100g of epoxy value, 108.7-150g/eq of epoxy equivalent, and 0.015-0.03Pa·s of viscosity at 25°C. The curing agent for aqueous epoxy resin is modified amines, and it is the substance which can be dissolved in water and react with aqueous epoxy resin to cure and crosslink, so as to play a role in curing and crosslinking reactions with aqueous epoxy resin.

### Example 1

Step 1:10 parts by weight of magnesium chloride are added into 50 parts by weight of water. After the magnesium is dissolved completely, a sodium hydroxide solution with a concentration of 0.5mol/L is added to adjust the pH value of the solution to be 8. Then 10 parts by weight of diatomite are added, and after the mixture is stirred uniformly, it is then baked, milled and sieved through sieves with 50 meshes, and a support powder loaded with snow thawing substances is obtained;

Step 2: 15 parts by weight of the support powders loaded with snow thawing substances are added into 10 parts by weight of cation emulsified asphalt, and then 10 parts by weight of aqueous epoxy resin, 10 parts by weight of water and 2 parts by weight of 703 curing agent are added successively to obtain the coating material for thawing ice and snow.

The use of said eco-friendly road surface coating material for thawing ice and snow obtained in the present example comprises the following steps successively:
step 1: the road is cleaned up by brooms or sweeping machines. Where water exists, the road surface is blow-dried by an air compressor before the construction or the construction is carried out after the road surface is dried. The signs and line markings on the road surface are covered by adhesive tapes to prevent it from being contaminated by the coating material;
step 2: after the coating material for thawing ice and snow are stirred uniformly, it is added into a spraying machine with uniform spraying function,
step 3: the spray width of the spraying machine is adjusted according to the width of the road, a piece of paper or isolation cloth with a width of 50-100cm wider than the spraying width and a length not shorter than 2m are set at the start and end points respectively to ensure the sideline of the start and end positions to be vertical thus to avoid repeated spraying,
step 4: the nozzle of the spraying machine is adjusted, and the spraying is carried out according to the pre-set route and spraying amount; the places that are not uniformly sprayed by the spraying machine should be manually processed in time; the spraying amount is 0.3 kg/m²,
step 5: the traffic is closed for maintenance for 9h to ensure the coating is not taken away by vehicles. The protection tapes in the line markings are teared up and the construction tools and residual materials are cleared up. Then the traffic is opened. The traffic should be controlled, a speed limit signs should be set and braking should be prohibited on the road during the beginning period, and when the normal traffic is restored, the limit signs are removed.

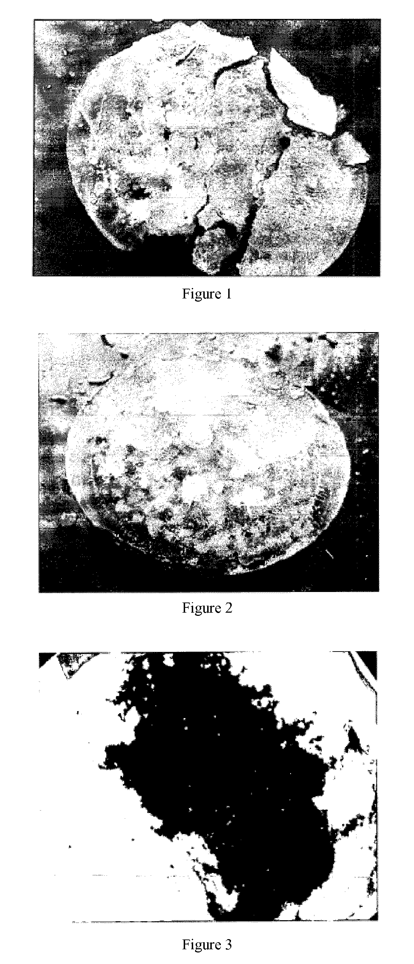

Removing ice and snow effect. As shown in Figures 1 and 2, the coating is brushed on a marshall specimen which is then placed in water; a blank specimen is used as a reference object, which is placed in -5 of low-temperature incubators. The surface ices are removed by a rubber hammer after 3h, the ices on the surface of the coating specimen are found to be loose and easy to be removed, but the ices on the surface of the blank specimen are dense and cannot be removed.

### Example 2

Step 1: 20 parts by weight of calcium chloride are added into 60 parts by weight of water. After the calcium chloride is dissolved completely, a sodium hydroxide solution with a concentration of 0.5mol/L is added to adjust the pH value of the solution to be 8. Then 20 parts by weight of silica gel are added, and after the mixture is stirred uniformly, it is then baked, milled and sieved through sieves with 60 meshes, and a support powder loaded with snow thawing substances is obtained.

Step 2: 25 parts by weight of the support powders loaded with snow thawing substances are added into 10 parts by weight of cation emulsified asphalt. Then 10 parts by weight of aqueous epoxy resin, 20 parts by weight of water and 6 parts by weight of 703 curing agent are added successively to obtain the coating material for thawing ice and snow.

The use of said eco-friendly road surface coating material for thawing ice and snow obtained in the present example comprises the following steps successively:
step 1: the road is cleaned up by brooms or sweeping machines. Where water exists, the road surface is blow-dried by an air compressor before the construction or the construction is carried out after the road surface is dried, and the signs and line markings on the road surface are covered by adhesive tapes to prevent them from being contaminated by the coating material;
step 2: after the coating material for thawing ice and snow is stirred uniformly, it is added into a spraying machine with uniform spraying function;
step 3: the spray width of the spraying machine is adjusted according to the width of the road, a piece of paper or isolation cloth with a width of 50-100cm wider than the spraying width and a length not shorter than 2m is set at the start and end points to ensure the sideline of the start and end positions to be vertical thus to avoid repeated spraying;
step 4: the nozzle of the spraying machine is adjusted, and the spraying is carried out according to the pre-set route and spraying amount; the places that are not uniformly sprayed by the spraying machine should be manually processed in time; the spraying amount is 0.5 kg/m²;
step 5: the traffic is closed for maintenance for 8h, and then the traffic is opened.

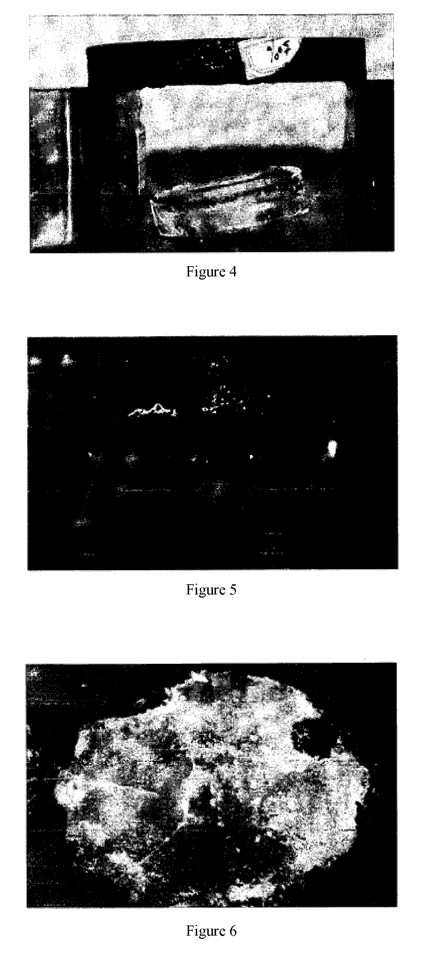

Removing ice and snow effect. As shown in Figures 3 and 4, the coating is brushed on a marshall specimen, and a blank specimen is used as a reference object. Water is sprinkled on the coating specimen, and then the ice layer is placed thereon which is then placed in -10 for 3h. The ices are found to not be bonded with the coating specimen after being taken out, but the ices are bonded with the blank specimen closely.

### Example 3

Step 1: 30 parts by weight of sodium chloride are added into 70 parts by weight of water. After the sodium chloride is dissolved completely, a sodium hydroxide solution with a concentration of 1mol/L is added to adjust the pH value of the solution to be 9, then 30 parts by weight of volcanic rock bentonite are added, and after the mixture is stirred uniformly, it is baked, milled and sieved through sieves with 70 meshes to obtain a support powder loaded with snow thawing substances.

Step 2: 30 parts by weight of the support powders loaded with snow thawing substances are added into 20 parts by weight of cation emulsified asphalt, then 20 parts by weight of aqueous epoxy resin, 30 parts by weight of water and 10 parts by weight of 120 curing agent are added successively to obtain the coating material for thawing ice and snow.

The use of said eco-friendly road surface coating material for thawing ice and snow obtained in the present example comprises the following steps successively:
step 1: the road is cleaned up by brooms or sweeping machine, where water exists, the road surface is blow-dried by an air compressor before the construction or the construction is carried out after the road surface is dried, and the signs and line markings on the road surface are covered by adhesive tapes to prevent them from being contaminated by the coating material;
step 2: after the coating material for thawing ice and snow are stirred uniformly, it is added into a spraying machine with uniform spraying function;
step 3: the spray width of the spraying machine is adjusted according to the width of the road, and a piece of paper or isolation cloth with a width of 50-100cm wider than the spraying width and a length not shorter than 2m is set at the start and end points to ensure the sideline of the start and end positions to be vertical and thus to avoid repeated spraying;
step 4: the nozzle of the spraying machine is adjusted, and the spraying is carried out according to the pre-set route and the spraying amount; the places which are not uniformly sprayed by the spraying machine, should be manually processed in time; the spraying amount is 0.7 kg/m²;
step 5: the traffic is closed for maintenance for 10h, and then the traffic is opened.

The present example has been carried out at the place 500 meters east of Myth Avenue in Xi'an, Shaanxi Province, China. There was no snow on the road when it snowed where the construction according to the present application is carried out, which was in obvious contrast with the surrounding roads.

### Example 4

Step 1: 40 parts by weight of calcium chloride are added into 80 parts by weight of water, after the calcium chloride is dissolved completely, a sodium hydroxide solution with a concentration of 1.5mol/L is added to adjust the pH value of the solution to be 9, then 40 parts by weight of expansion perlites are added, after the mixture is stirred uniformly, it is then baked, milled and sieved through sieves with 80 meshes, and a support powder loaded with snow thawing substances is obtained.

Step 2: 35 parts by weight of the support powders loaded with snow thawing substances are added into 20 parts by weight of cation emulsified asphalt, then 20 parts by weight of aqueous epoxy resin, 40 parts by weight of water and 14 parts by weight of 593 curing agent are added successively to obtain the coating material for thawing ice and snow.

The use of said eco-friendly road surface coating material for thawing ice and snow obtained in the present example comprises the following steps successively:
step 1: the road is cleaned up by brooms or sweeping machines, where water exists, the road surface is blow-dried by an air compressor before the construction or the construction is carried out after the road surface is dried, and the signs and line markings on the road surface are covered by adhesive tapes to be prevented from being contaminated by the coating material;
step 2: after the coating material for thawing ice and snow are stirred uniformly, it is added into a spraying machine with uniform spraying function;
step 3: the spray width of the spraying machine is adjusted according to the width of the road, and a piece of paper or isolation cloth with a width of 50-100cm wider than the spraying width and a length not shorter than 2m is set at the start and end points to ensure the sideline of the start and end positions to be vertical and thus to avoid repeated spraying;
step 4: the nozzle of the spraying machine is adjusted, and the spraying is carried out according to the pre-set route and the spraying amount; the places that are not uniformly sprayed by the spraying machine should be manually processed in time; the spraying amount is 0.9 kg/m²; step 5: the traffic is closed for maintenance for 8h, and then the traffic is opened.

Removing ice and snow effect. As shown in Figures 5 and 6, the coating is brushed on a marshall specimen, which is then placed in water; a blank specimen is used as a reference object. The specimen is placed in -15°C of low-temperature incubators, and the surface ices are removed by a rubber hammer after 3h. It is found that the ices on the surface of the coating specimen are loose, but the ices on the surface of blank specimen are dense.

### Example 5

Step 1: 50 parts by weight of potassium acetate are added into 100 parts by weight of water, after the potassium acetate is dissolved completely, a sodium hydroxide solution with a concentration of 2.0mol/L is added to adjust the pH value of the solution to be 10, then 50 parts by weight of sawdust powders are added, and after the mixture is stirred uniformly, it is baked, milled and sieved through sieves with 100 meshes, and a support powder loaded with snow thawing substances is obtained.

Step 2: 40 parts by weight of the support powders loaded with snow thawing substances are added into 30 parts by weight of cation emulsified asphalt, and then 30 parts by weight of aqueous epoxy resin, 50 parts by weight of water and 18 parts by weight of a fatty acid modified curing agent are added successively to obtain the coating material for thawing ice and snow.

The formula of the fatty acid modified curing agent is as follows,

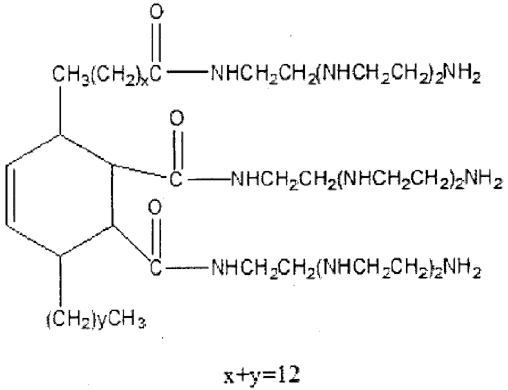

The use of said eco-friendly road surface coating material for thawing ice and snow obtained in the present example comprises the following steps successively:
step 1: the road is cleaned up by brooms or sweeping machines, where water exists, the road surface is blow-dried by an air compressor before the construction or the construction is carried out after the road surface is dried, and the signs and line markings on the road surface are covered by adhesive tapes to be prevented from being contaminated by the coating material;
step 2: after the coating material for thawing ice and snow are stirred uniformly, it is added into a spraying machine with uniform spraying function;
step 3: the spray width of the spraying machine is adjusted according to the width of the road, and a piece of paper or isolation cloth with a width of 50-100cm wider than the spraying width and a length not shorter than 2m is set at the start and end points to ensure the sideline of the start and end positions to be vertical and thus to avoid repeated spraying;
step 4: the nozzle of the spraying machine is adjusted, and the spraying is carried out according to the pre-set route and spraying amount; the places that are not uniformly sprayed by the spraying machine should be manually processed in time; the spraying amount is 1.0 kg/m²;
step 5: the traffic is closed for maintenance for 3h to ensure the coating material not taken away by vehicles, and the protection tapes in the line markings are teared up and the construction tools and residual materials are cleared up; If the traffic needs to be opened in 4h, clean sands can be sprayed on the road after the construction; when the traffic is opened, the traffic should be controlled, speed limit signs should be set and braking should be prohibited on the road at the beginning period, and when the normal traffic is restored, the limit signs are removed.

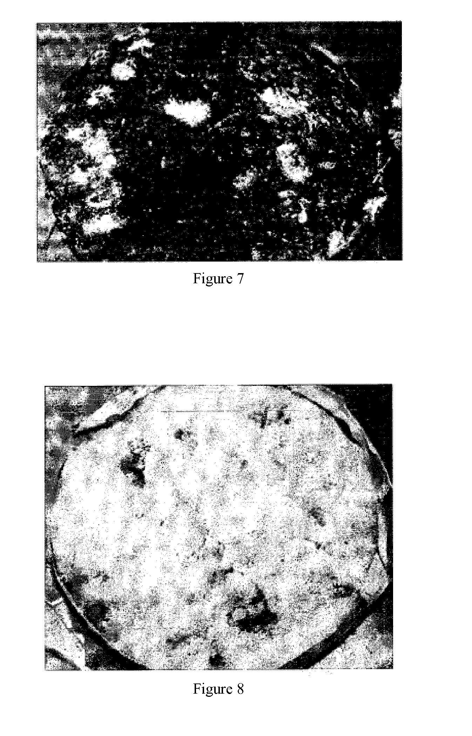

Removing ice and snow effect. As shown in Figures 7 and 8, the coating is brushed on a marshall specimen, and ice and snow particles are sprinkled on the surface of the coating specimen, which is then placed in -20°C. The dissolving conditions of the ice and snow particles are observed after 3h. The result shows that the coating can melt the lower layer of thick ice and snow to make the ice and snow layer drop off the road surface.

## Claims

1. A preparation method for an eco-friendly road surface coating material for thawing ice and snow, wherein said method is achieved by the following steps:
step 1: adding 10-50 parts by weight of snow thawing substances into 50-100 parts by weight of water, dissolving the snow thawing substances completely, adding the sodium hydroxide solution with a concentration of 0.5-2.0mol/L to adjust the pH value of the solution to be 8-10, then adding 10-50 parts by weight of support material, and after stirring uniformly, baking, milling the mixture, sieving it through sieves with 50-100 meshes to obtain a support powder loaded with snow thawing substances; and
step 2: adding 15-40 parts by weight of the support powder loaded with snow thawing substances into 10 to 30 parts by weight of cation emulsified asphalt, then adding 10 to 30 parts by weight of aqueous epoxy resin, 10-50 parts by weight of water and a curing agent of aqueous epoxy resin successively to obtain the coating material for thawing ice and snow, wherein the adding amount of the curing agent of aqueous epoxy resin, based on aqueous epoxy resin, is 20-60%.

2. The preparation method according to claim 1, wherein said snow thawing substance in step 1 is one or more of chlorides, nitrates, acetates, polyethylene glycols and glycols, and said support material in step 1 is one or more of silica gel, diatomite, sawdust powders, molecular sieve series, volcanic rock bentonite and expansion perlites.

3. The preparation method according to claim 1 or 2, wherein said curing agent of aqueous epoxy resin in step 2 is 703 curing agent, 120 curing agent, and 593 curing agent or fatty acid modified amines.

4. The preparation method according to claim 3, wherein said method is achieved by the following steps:
step 1: adding 50 parts by weight of potassium acetate into 100 parts by weight of water, dissolving the potassium acetate completely, adding the sodium hydroxide solution with a concentration of 2.0mol/L to adjust the pH value of the solution to be 10, then adding 50 parts by weight of sawdust powders, and after stirring uniformly, baking, milling the mixture, sieving it through sieves with 100 meshes to obtain a support powder loaded with snow thawing substances; and
step 2: adding 40 parts by weight of the support powder loaded with snow thawing substances into 30 parts by weight of cation emulsified asphalt, then adding 30 parts by weight of aqueous epoxy resin, 50 parts by weight of water and 18 parts by weight of the curing agent of fatty acid modified amines successively to obtain the coating material for thawing ice and snow.

5. An eco-friendly road surface coating material for thawing ice and snow according to any one of claims 1 to 4.

6. A usage of said eco-friendly road surface coating material for thawing ice and snow according to claim 5, wherein said usage is achieved by the following steps:
step 1: cleaning and drying the road surface, and covering the signs and line markings on the road,
step 2: after stirring the coating material for thawing ice and snow uniformly, adding it to a spraying machine with uniform spraying function,
step 3: opening or folding the spraying crossbar of the spraying machine according to the width of the road which needs spraying to adjust the spray width of the spraying machine, setting a piece of paper or isolation cloth with a width of 50-100cm wider than the spraying width and a length not shorter than 2m at the start and end points to ensure the sideline of the start and end positions to be vertical thus to avoid repeated spraying,
step 4: adjusting the nozzle of the spraying machine, spraying according to the pre-set route and spraying amount, and artificially treating the places uniformly sprayed by the spraying machine in time to ensure the spraying amount of 0.3 to 1 kg/m², and
step 5: after closing the traffic for maintenance for 3 to 10h, opening the traffic.

7. The use of said eco-friendly road surface coating material for thawing ice and snow according to claim 6, wherein in step 5, in case the traffic needs to be opened in a short time after it is closed, spraying clean sands on the road which has been constructed.
